# EUROPEAN PATENT APPLICATION

(11) **EP 4 840 679 A1**
(43) Date of publication of application: **18.11.2026**
(21) Application number: 24927727.8
(22) Date of filing: 04.03.2024
(51) Int. Cl.: B60L 53/302, H01M 10/613

(54) **ENERGY STORAGE SYSTEM**

(71) Applicant: Contemporary Amperex Technology Co., Limited, Ningde, Fujian 352100 (CN)
(72) Inventor: LI, Jiaqi, Ningde, Fujian 352100 (CN); XING, Yanqing, Ningde, Fujian 352100 (CN); LIU, Chen, Ningde, Fujian 352100 (CN); MENG, Kai, Ningde, Fujian 352100 (CN)
(74) Representative: Lorenz Seidler Gossel Part. mbB
(86) International application number: PCT/CN2024/079914
(87) International publication number: WO 2025/184771

(57) **Abstract**

Disclosed in the present invention is an energy storage system, comprising at least one energy storage device, wherein each energy storage device comprises an energy storage case and a heat exchange member arranged in the energy storage case, at least one battery is stored in the energy storage case, and the heat exchange member is used for exchanging heat with the battery; and a heat exchange device, comprising a first heat exchange assembly and a second heat exchange assembly, wherein the first heat exchange assembly comprises a first circulation loop, the second heat exchange assembly is communicated with heat exchange members to form a second circulation loop, and the second circulation loop exchanges heat with the first circulation loop.

## Description

### TECHNICAL FIELD

The present disclosure relates to the field of new energy technologies, and in particular, to an energy storage system.

### BACKGROUND

With the rapid development of new energy technologies, energy storage devices have become one of the important research directions in the new energy field. Generally, an energy storage device is configured with a heat exchange device for heat exchange. Currently, higher requirements are imposed on the heat exchange efficiency of the heat exchange device.

### SUMMARY

To solve the above technical problem, the present disclosure provides an energy storage system with high heat exchange efficiency.

The present disclosure is implemented by the following technical solutions.

The present disclosure provides an energy storage system. The energy storage system includes: at least one energy storage device, where each energy storage device includes an energy storage case and a heat exchange member disposed in the energy storage case, the energy storage case accommodates at least one battery, and the heat exchange member is configured to exchange heat with the battery; and a heat exchange device, where the heat exchange device includes a first heat exchange assembly and a second heat exchange assembly, the first heat exchange assembly includes a first circulation loop, the second heat exchange assembly is in communication with the heat exchange member and forms at least one second circulation loop, and the second circulation loop exchanges heat with the first circulation loop.

Heat exchange with the battery is implemented through the second circulation loop, and the second circulation loop exchanges heat with the first circulation loop, such that a heat exchange medium in the second circulation loop can be cooled or heated in time, and thus the heat exchange medium in the second circulation loop can exchange heat efficiently with the battery at a substantially unchanged temperature, thereby improving the heat exchange efficiency.

In some embodiments, the second circulation loop and the first circulation loop are disposed close to each other for heat exchange.

The first circulation loop and the second circulation loop are close to each other to improve the heat exchange efficiency therebetween.

In some embodiments, the second heat exchange assembly includes: a circulation pump and a liquid pipeline; the circulation pump is in communication with the heat exchange member through the liquid pipeline.

The second circulation loop can be formed by the circulation pump, the liquid pipeline, and the heat exchange member, and the heat exchange medium circulates in the second circulation loop to take away the heat of the battery and exchange heat with the first circulation loop in time, thereby continuously and efficiently exchanging heat with the battery and improving the heat exchange efficiency.

In some embodiments, the first heat exchange assembly includes a compressor, a first heat exchanger, an expansion valve, and a second heat exchanger that are sequentially in communication through a refrigerant circulation pipeline.

The first circulation loop can not only cool the second circulation loop in time, but also heat the second circulation loop in time, such that the battery can be efficiently cooled and heated, thereby improving the heat exchange efficiency while simplifying the structure of the heat exchange device and reducing the cost.

In some embodiments, the heat exchange member of each energy storage device is connected to a plurality of heat exchange plates; the heat exchange plates are connected in parallel, and each heat exchange plate exchanges heat with a respective battery.

The plurality of heat exchange plates are connected in parallel to each other, which can reduce the mutual influence of the heat exchange plates on the temperature and improve the heat exchange efficiency.

In some embodiments, the first heat exchanger includes a first flow channel and a second flow channel; the first heat exchanger is in communication with the refrigerant circulation loop through the first flow channel, and the second flow channel is in communication with the liquid pipeline.

Heat exchange between the two circulation loops is implemented by using the first heat exchanger provided with two flow channels, and the two circulation loops are closer to each other, such that the heat exchange efficiency is higher, and the structure can be simplified.

In some embodiments, a plurality of the energy storage devices are provided, and the heat exchange device is located outside the energy storage case.

By placing the heat exchange device outside the energy storage case, the internal space of the energy storage case is not occupied, and more batteries can be placed in each energy storage case, thereby improving the energy density of each energy storage device. One heat exchange device continuously and efficiently exchanges heat for a plurality of energy storage devices simultaneously by using two sets of circulation loops (the first circulation loop and the second circulation loop), thereby simplifying the entire structure, reducing the cost, and providing higher grouping efficiency of the energy storage system. In addition, the heat exchange device is located outside the energy storage device, which facilitates maintenance and replacement.

In some embodiments, the liquid pipeline includes a main pipeline and a plurality of branches in communication with the main pipeline, and the heat exchange members of the energy storage devices are connected in parallel to each other through the branches.

The heat exchange members of the energy storage devices are connected in parallel to each other through the branches, which can reduce the adverse effects of the heat exchange members on the heat exchange temperature of the battery and improve the heat exchange efficiency.

In some embodiments, each heat exchange member includes a supply pipeline and a liquid return pipeline; the supply pipeline includes a liquid supply port and a first port that is in communication with each heat exchange plate, and the liquid return pipeline includes a liquid return port and a second port that is in communication with each heat exchange plate; each energy storage case is provided with a liquid inlet connector and a liquid return connector; the liquid inlet connector is connected to the liquid supply port, and the liquid return connector is connected to the liquid return port.

In some embodiments, the branch includes a liquid inlet branch and a liquid return branch; the liquid inlet branch is detachably connected to the liquid inlet connector, and the liquid return branch is detachably connected to the liquid return connector.

The liquid inlet connector and the liquid return connector are disposed outside the energy storage case and are detachably connected to the branches, such that the installation and maintenance are facilitated, and the assembly efficiency is improved.

In some embodiments, the liquid inlet connector is connected to the liquid inlet branch by means of snap-fitting, hot melting, or threading; and/or the liquid return connector is connected to the liquid return branch by means of snap-fitting, hot melting, or threading.

The detachable connection in the above manner facilitates the disassembly and assembly, and improves the assembly efficiency.

In some embodiments, the heat exchange device is disposed at a top of the energy storage case of at least one energy storage device.

The heat exchange device may be disposed at the top of the energy storage case, such that the occupied area can be reduced, and the land utilization can be improved. Therefore, more energy storage devices can be arranged to improve the energy density of the energy storage system.

In some embodiments, the plurality of energy storage devices surround the heat exchange device, with the heat exchange device as a center.

Therefore, the lengths of the branches connecting the heat exchange device to the energy storage devices can be reduced, and the lengths of the branches are substantially the same, thereby shortening the circulation time of the heat exchange medium in the second circulation loop, and improving the heat exchange efficiency and the heat exchange uniformity.

In some embodiments, the plurality of energy storage devices are arranged along a first direction to form an energy storage device row;

along a direction intersecting with the first direction, the heat exchange device is located on one side of the energy storage device row; or the heat exchange device is located between any two energy storage devices along the first direction.

In some embodiments, the plurality of energy storage devices are arranged along the first direction to form an energy storage device row, and a plurality of energy storage device rows are arranged along a second direction intersecting with the first direction; the heat exchange device is located on one side of the energy storage device along either the first direction or the second direction.

In some embodiments, the energy storage device includes an energy storage container and/or an energy storage electrical cabinet.

The embodiments of the present disclosure have the following beneficial effects:

According to the present disclosure, an energy storage system with high heat exchange efficiency is provided.

### BRIEF DESCRIPTION OF THE DRAWINGS

By reading the detailed description of the preferred embodiments below, various additional advantages and benefits will become clear to those of ordinary skill in the art. The drawings are provided solely for the purpose of illustrating the preferred embodiments and shall not be construed as limiting the scope of the present disclosure. Throughout all the drawings, the same components are denoted by the same reference numerals. In the drawings:
FIG. 1 is a schematic structural diagram of an energy storage device according to some embodiments of the present disclosure;
FIG. 2 is a schematic exploded diagram of a battery pack according to some embodiments of the present disclosure;
FIG. 3 is a schematic structural diagram of a battery module group according to some embodiments of the present disclosure;
FIG. 4 is a schematic structural diagram of an energy storage system according to some embodiments of the present disclosure;
FIG. 5 is a top view of an energy storage system according to some embodiments of the present disclosure;
FIG. 6 is a structural diagram of an energy storage system according to some embodiments of the present disclosure;
FIG. 7 is a schematic structural diagram of an energy storage system according to some other embodiments of the present disclosure; and
FIGs. 8 to 10 are schematic diagrams of different arrangement manners between an energy storage device and a heat exchange device of an energy storage system according to some embodiments of the present disclosure.

Description of the reference numerals:
1-battery cell; 2-bottom plate; 3-vertical plate; 4-cover body;
100-energy storage device; 110-energy storage case; 120-battery; 121-heat exchange plate; 130-communication interface; 140-electric energy transmission interface; 150-heat exchange member; 161-liquid inlet connector; 162-liquid return connector;
200-heat exchange device; 210a-first circulation loop; 211-compressor; 212-first heat exchanger; 212a-first flow channel; 212b-second flow channel; 213-expansion valve; 214-second heat exchanger; 215-four-way valve; 220a-second circulation loop; 221-circulation pump; 222-liquid pipeline; 2221-main pipeline; 2222-branch.

### DETAILED DESCRIPTION

The following describes in detail embodiments of technical solutions of the present disclosure with reference to the drawings. The following embodiments are merely used to more clearly illustrate the technical solutions of the present disclosure, and therefore, are only exemplary and do not limit the protection scope of the present disclosure.

Unless otherwise defined, all technical and scientific terms used herein have the same meaning as commonly understood by those skilled in the art to which the present disclosure relates. The terms used herein are intended to merely describe the specific embodiments, rather than to limit the present disclosure. The terms "include", "comprise", "have", and "provided with", and any other variations thereof in this specification and the description of the drawings of the present disclosure are intended to cover non-exclusive inclusions.

In the description of the embodiments of the present disclosure, the technical terms "first", "second", and the like are merely intended to distinguish different objects and should not be understood as any indication or implication of relative importance or any implicit indication of the number, specific sequence, or primary-secondary relationship of the technical features indicated. In the description of the embodiments of the present disclosure, unless otherwise specifically defined, "plurality of" means two or more.

Reference in the present disclosure to "embodiment" means that a particular feature, structure, or characteristic described in combination with the embodiment can be included in at least one embodiment of the present disclosure. The references of the word in the context of the specification do not necessarily refer to the same embodiment, nor to separate or alternative embodiments exclusive of other embodiments. It will be explicitly and implicitly understood by those skilled in the art that the embodiments described herein may be combined with other embodiments.

In the description of the embodiments of the present disclosure, the term "and/or" is merely a way to describe the association relationship between associated objects, indicating that there are three possible relationships. For example, "A and/or B" may denote: the presence of A alone, the simultaneous presence of A and B, and the presence of B alone. In addition, the character "/" herein generally indicates an "or" relationship between the associated objects before and after the "/".

In the description of the embodiments of the present disclosure, the technical terms "length", "width", "thickness", "upper", "lower", "front", "rear", "left", "right", "vertical", "horizontal", "top", "bottom", "inner", "outer", "circumferential", and the like indicate orientations or positional relationships based on those shown in the drawings. They are merely for the convenience of describing the embodiments of the present disclosure and simplifying the description, rather than indicating or implying that the device or element referred to must have a specific orientation or be constructed, operated, or used in the specific orientation, and thus should not be construed as a limitation to the embodiments of the present disclosure.

In the description of the embodiments of the present disclosure, unless otherwise clearly specified and defined, the technical terms "install", "interconnect", "connect", "fix", and the like should be interpreted in their broad senses. For example, they may be a fixed connection, a detachable connection, or an integral connection; a mechanical connection or an electrical connection; or a direct connection, an indirect connection via an intermediate, a communication between interiors of two elements, or an interaction between two elements. For those of ordinary skill in the art, the specific meanings of the above terms in the embodiments of the present disclosure can be interpreted according to specific conditions.

In the description of the embodiments of the present disclosure, unless otherwise clearly specified and defined, the technical term "contact" should be interpreted in a broad sense. For example, the "contact" may be direct contact, or contact through an intermediate medium layer, or contact without an interaction force between two contacting elements, or contact with an interaction force between two contacting elements.

The present disclosure is described in detail below.

With the rapid development of new energy technologies, energy storage devices have become one of the important research directions in the new energy field. Generally, a heat exchange device is configured inside the case of each energy storage device, and the heat exchange device exchanges heat with a battery inside the case through a liquid circulation pipeline to perform thermal management on the battery. The temperature of the liquid in the liquid circulation pipeline changes during the heat exchange with the battery, and if the heat exchange efficiency of the heat exchange device is insufficient, the temperature cannot be effectively lowered in time, which is not conducive to the cooling of the battery.

In addition, since the heat exchange device is disposed inside the case, the heat exchange device occupies a large amount of battery storage space, which is not conducive to the improvement of the energy density of the energy storage device; this also increases the volume, weight, and the like of the energy storage device, which is not conducive to the transportation of the integrated energy storage device. Since one heat exchange device can only perform thermal management on one energy storage device, the energy consumption is increased, and the cost is high.

In this regard, an energy storage system is designed according to the present disclosure. The energy storage system includes: at least one energy storage device, where each energy storage device includes an energy storage case and a heat exchange member disposed in the energy storage case, the energy storage case accommodates at least one battery, and the heat exchange member is configured to exchange heat with the battery; and a heat exchange device, including a first heat exchange assembly and a second heat exchange assembly, where the first heat exchange assembly includes a first circulation loop, the second heat exchange assembly is in communication with each heat exchange member and forms a second circulation loop, and the second circulation loop exchanges heat with the first circulation loop.

Heat exchange with the battery is implemented through the second circulation loop, and the second circulation loop exchanges heat with the first circulation loop, such that the first circulation loop can cool or heat the second circulation loop in time, and thus the heat exchange medium in the second circulation loop can exchange heat efficiently with the battery at a substantially unchanged temperature, thereby improving the heat exchange efficiency.

The energy storage system of the present disclosure is applicable to the field of renewable energy storage, such as power energy storage, photovoltaic energy storage, and wind power energy storage, and is also applicable to electric vehicle charging and other fields.

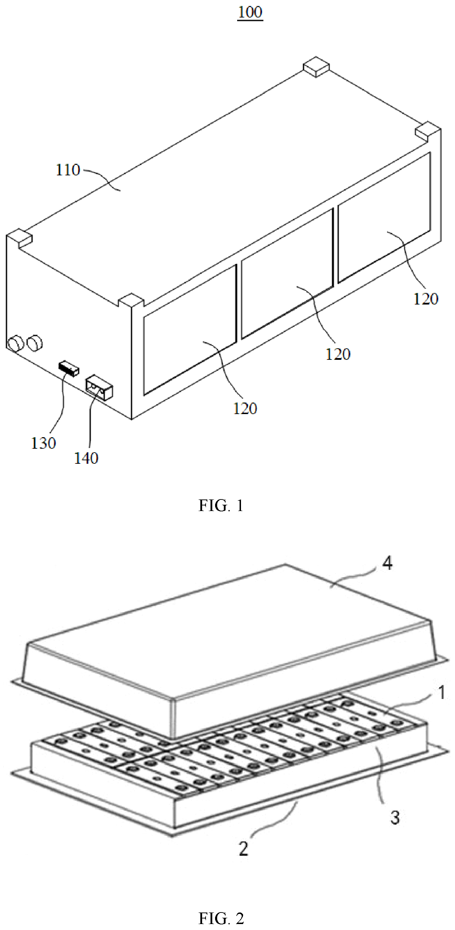

Referring to FIG. 1, the energy storage device 100 may include an energy storage case 110 and at least one battery 120 accommodated in the energy storage case 110. The energy storage device 100 may further include a communication interface 130 and an electric energy transmission interface 140 that are provided in the energy storage case 110. In some embodiments, the interior of the energy storage case may be divided into a battery compartment and an electrical compartment; the battery 120 is usually placed in the battery compartment, and an electronic control device, a communication device, and the like are usually configured in the electrical compartment; the communication interface 130 and the electric energy transmission interface 140 may be electrically connected to the electronic control device, the communication device, and the like in the electrical compartment.

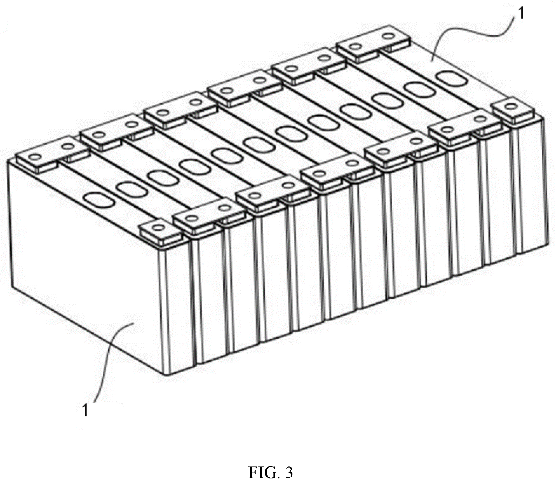

Referring to FIGs. 2 and 3, the battery 120 mentioned in the embodiments of the present disclosure may be a battery cell 1.

The battery cell 1 may be a secondary battery, which refers to a battery cell that can continue to be used by activating the active material by charging after the battery cell is discharged.

The battery cell 1 may be a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, or the like. This is not limited in the embodiments of the present disclosure.

The battery cell 1 generally includes an electrode assembly. The electrode assembly includes a positive electrode, a negative electrode, and a separator. During the charging and discharging process of the battery cell, active ions (such as lithium ions) are intercalated and deintercalated back and forth between the positive electrode and the negative electrode. The separator is disposed between the positive electrode and the negative electrode to prevent the positive electrode and the negative electrode from short-circuiting while allowing the passage of active ions.

In some embodiments, the positive electrode may be a positive electrode plate, and the positive electrode plate may include a positive electrode current collector and a positive electrode active material disposed on at least one surface of the positive electrode current collector.

As an example, the positive electrode current collector is provided with two surfaces opposite to each other in its own thickness direction, and the positive electrode active material is disposed on either or both of the two opposite surfaces of the positive electrode current collector.

As an example, a metal foil or a composite current collector may be used as the positive electrode current collector. For example, for the metal foil, aluminum or stainless steel treated with silver on the surface, stainless steel, copper, aluminum, nickel, carbon electrode, carbon, nickel, titanium, or the like may be used. The composite current collector may include a polymer material base layer and a metal layer. The composite current collector may be formed by forming a metal material (aluminum, aluminum alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, and polyethylene).

As an example, the positive electrode active material may include at least one of the following materials: a lithium-containing phosphate, a lithium transition metal oxide, and respective modified compounds thereof. However, the present disclosure is not limited to these materials, and other conventional materials that can be used as the positive electrode active material in batteries may also be used. These positive electrode active materials may be used alone or in a combination of two or more. Examples of the lithium-containing phosphate may include, but are not limited to, at least one of lithium iron phosphate (such as LiFePO₄ (also referred to as LFP)), a composite material of lithium iron phosphate and carbon, lithium manganese phosphate (such as LiMnPO₄), a composite material of lithium manganese phosphate and carbon, lithium manganese iron phosphate, and a composite material of lithium manganese iron phosphate and carbon.

In some embodiments, a foam metal may be used as the positive electrode. The foam metal may be foam nickel, foam copper, foam aluminum, foam alloy, foam carbon, or the like. When the foam metal is used as the positive electrode, the surface of the foam metal may not be provided with the positive electrode active material. Certainly, the positive electrode active material may also be provided. As an example, a lithium source material, a potassium metal, or a sodium metal may also be incorporated into and/or deposited in the foam metal; the lithium source material is a lithium metal and/or a lithium-rich material.

In some embodiments, the negative electrode may be a negative electrode plate, and the negative electrode plate may include a negative electrode current collector.

As an example, a metal foil, a foam metal, or a composite current collector may be used as the negative electrode current collector. For example, for the metal foil, aluminum or stainless steel treated with silver on the surface, stainless steel, copper, aluminum, nickel, carbon electrode, carbon, nickel, titanium, or the like may be used. The composite current collector may include a polymer material base layer and a metal layer. The foam metal may be foam nickel, foam copper, foam aluminum, foam alloy, foam carbon, or the like. The composite current collector may be formed by forming a metal material (copper, copper alloy, nickel, nickel alloy, titanium, titanium alloy, silver, silver alloy, or the like) on a polymer material substrate (such as a substrate made of polypropylene, polyethylene terephthalate, polybutylene terephthalate, polystyrene, and polyethylene). In some embodiments, the material of the positive electrode current collector may be aluminum, and the material of the negative electrode current collector may be copper.

In some embodiments, the electrode assembly further includes a separator. The separator is disposed between the positive electrode and the negative electrode.

In some embodiments, the separator is a separation film. The present disclosure does not particularly limit the type of separation film, and any porous-structure separation film known to have good chemical stability and mechanical stability may be selected.

As an example, the main material of the separation film may be selected from at least one of glass fiber, non-woven fabric, polyethylene, polypropylene, polyvinylidene fluoride, and ceramic.

In some embodiments, the separator is a solid-state electrolyte. The solid-state electrolyte is disposed between the positive electrode and the negative electrode, serving both to transport ions and to isolate the positive electrode from the negative electrode.

In some embodiments, the battery cell 1 further includes an electrolyte that serves to conduct ions between the positive electrode and the negative electrode. The present disclosure does not particularly limit the type of electrolyte, which may be selected according to needs. The electrolyte may be liquid-state, gel-state, or solid-state.

In some embodiments, the electrode assembly is of a wound structure. The positive electrode plate and the negative electrode plate are wound to form a wound structure.

In some embodiments, the electrode assembly is of a stacked structure.

As an example, a plurality of positive electrode plates and a plurality of negative electrode plates may be provided, and the plurality of positive electrode plates and the plurality of negative electrode plates are alternately stacked.

As an example, a plurality of positive electrode plates may be provided, and the negative electrode plate is folded to form a plurality of stacked folded segments, with one positive electrode plate disposed between adjacent folded segments.

As an example, the positive electrode plate and the negative electrode plate are both folded to form a plurality of stacked folded segments.

As an example, a plurality of separators may be provided and are separately disposed between any adjacent positive electrode plates or negative electrode plates.

As an example, the separators may be provided continuously and are disposed between any adjacent positive electrode plates or negative electrode plates by means of folding or winding.

In some embodiments, the shape of the electrode assembly may be cylindrical, flat, polygonal prismatic, or the like.

In some embodiments, the electrode assembly is provided with tabs that can conduct current out of the electrode assembly. The tabs include a positive electrode tab and a negative electrode tab.

In some embodiments, the battery cell 1 may include a battery shell. The battery shell is configured to encapsulate components such as the electrode assembly and the electrolyte. The battery shell may be a steel shell, an aluminum shell, a plastic shell (such as polypropylene), a composite metal shell (such as a copper-aluminum composite shell), an aluminum-plastic film, or the like.

As an example, the battery cell 1 may be a cylindrical battery cell, a prismatic battery cell, a pouch battery cell, or a battery cell of other shapes. The prismatic battery cell includes a square-shell battery cell, a blade-shaped battery cell, and a polygonal prismatic battery, and the polygonal prismatic battery is, for example, a hexagonal prismatic battery. This is not particularly limited in the present disclosure.

In some embodiments, the battery shell includes an end cover and a battery shell body. The battery shell body is provided with an opening, and the end cover closes the opening to form a sealed space for accommodating the electrode assembly, the electrolyte, and other substances. The battery shell body may be provided with one or more openings. There may also be one or more end covers.

In some embodiments, at least one electrode terminal is provided on the battery shell, and the electrode terminal is electrically connected to the tabs. The electrode terminal may be directly connected to the tabs or may be indirectly connected to the tabs by an adapting component. The electrode terminal may be disposed on the end cover or may be disposed on the battery shell body.

In some embodiments, the battery shell is provided with a pressure relief mechanism. The pressure relief mechanism is configured to relieve the internal pressure of the battery cell.

Referring to FIG. 3, the battery mentioned in the embodiments of the present disclosure may be a battery module, which includes one or more battery cells 1 to provide a single physical module with higher voltage and capacity. When there are a plurality of battery cells 1, the plurality of battery cells are connected in series, in parallel, or in series-parallel by a busbar component. The plurality of battery cells 1 are arranged and fixed to form one battery module.

Referring to FIG. 2, the battery 120 mentioned in the embodiments of the present disclosure may be a battery pack. The battery pack includes a battery case and at least one battery cell 1, and the battery cell 1 is accommodated in the battery case. The battery case may include a bottom plate 2, a vertical plate 3, and a cover body 4. The cover body 4 covers the bottom plate 1 and the vertical plate 3 from above, such that the bottom plate 2, the vertical plate 3, and the cover body 4 jointly form an accommodating space for accommodating the battery cell 1.

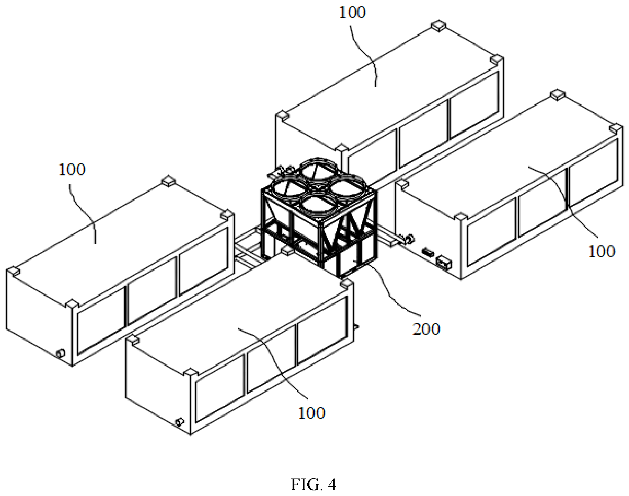

Some embodiments of the present disclosure will be described in detail below with reference to FIGs. 4 to 10.

The present disclosure provides an energy storage system, including at least one energy storage device 100 and a heat exchange device 200. The heat exchange device 200 may sometimes also be referred to as a heat exchange unit.

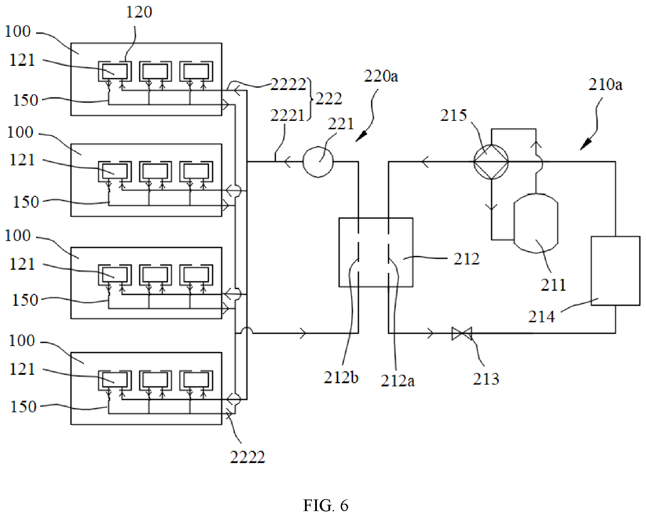

Each energy storage device 100 includes an energy storage case 110 and a heat exchange member 150 (referring to FIG. 6) disposed in the energy storage case 110; the energy storage case 110 accommodates at least one battery 120, and the heat exchange member 150 is configured to exchange heat with the battery 120. The heat exchange device 200 includes a first heat exchange assembly and a second heat exchange assembly; the first heat exchange assembly includes a first circulation loop 210a, the second heat exchange assembly is in communication with each heat exchange member 120 and forms a second circulation loop 220a, and the second circulation loop 220a exchanges heat with the first circulation loop 210a.

Each energy storage device 100 includes an energy storage case 110, which is provided with an accommodating space and configured to accommodate at least one battery 120.

The heat exchange member 150 is configured to exchange heat with the battery 120 in the energy storage case 110, and the heat exchange member 150 may cool or heat the battery 120 to implement thermal management on the battery 120. A heat exchange medium may circulate in the second circulation loop formed by the heat exchange member 150 and the second heat exchange assembly 220, thereby taking away the heat generated by the battery 120 or heating the battery.

The heat exchange member 150 may be a component provided with a cavity, such as a heat exchange tube. The material of the heat exchange member 150 may be a metal or a metal alloy with certain thermal conductivity, such as copper, aluminum, steel, or aluminum alloy.

The first circulation loop 210a and the second circulation loop 220a are two independent circulation loops. A first heat exchange medium in the first circulation loop 210a circulates in the first circulation loop 210a, and a second heat exchange medium in the second circulation loop 220a circulates in the second circulation loop 220a. The first heat exchange medium may be the same as or different from the second heat exchange medium; the first heat exchange medium and the second heat exchange medium may be gases, liquids, or media that undergo heat exchange by means of gas-liquid phase change. In some specific examples, the first heat exchange medium is a refrigerant, such as Freon, and the second heat exchange medium is a coolant liquid, such as ethylene glycol or water.

The manner in which the first circulation loop 210a exchanges heat with the second circulation loop 220a may be that the first heat exchange medium in the first circulation loop 210a cools or heats the second heat exchange medium in the second circulation loop 220a.

Taking an example where the second circulation loop 220a cools the battery 120 and the second heat exchange medium is a liquid, the liquid circulating in the second circulation loop 220a takes away the heat generated by the battery 120; in this case, the temperature of the liquid in the second circulation loop 220a rises. Since the first circulation loop 210a can cool the second circulation loop 220a in time, the liquid in the second circulation loop 220a can basically maintain a relatively low temperature to exchange heat with the battery 120, such that the battery 120 in the energy storage device 100 can be continuously and efficiently cooled.

Heat exchange with the battery 120 is implemented through the second circulation loop 220a, and the second circulation loop 220a exchanges heat with the first circulation loop 210a, such that the liquid in the second circulation loop 220a can be cooled or heated in time, enabling the liquid in the second circulation loop 220a to exchange heat efficiently with the battery 120 at a substantially unchanged temperature, thereby improving the heat exchange efficiency.

In some embodiments, the first circulation loop 210a and the second circulation loop 220a are disposed close to each other.

Being disposed close to each other may mean that the first circulation loop 210a and the second circulation loop 220a are in contact with each other for heat exchange, and the contact for heat exchange may be direct contact or indirect contact. Alternatively, the first circulation loop 210a and the second circulation loop 220a are not in contact with each other, but are spatially close to each other, to the extent that they can exchange heat with each other, for heat exchange.

The first circulation loop 210a and the second circulation loop 220a are close to each other to improve the heat exchange efficiency therebetween.

In some embodiments, the second heat exchange assembly includes a circulation pump 221 and a liquid pipeline 222. The circulation pump 221 is in communication with the heat exchange member 150 of the energy storage device 100 through the liquid pipeline 222.

The circulation pump 221 is configured to enable the second heat exchange medium in the second circulation loop 220a to circulate in the liquid pipeline 222, the heat exchange member 150, and a heat exchange plate 121 (described later).

The second circulation loop 220a can be formed by the circulation pump 221, the liquid pipeline 222, and the heat exchange member 150 (also including each heat exchange plate 121 in the case where the heat exchange member 150 is connected to a plurality of heat exchange plates 121), and the liquid circulates in the second circulation loop 220a to take away the heat of the battery and exchange heat with the first circulation loop 210a in time, thereby continuously and efficiently exchanging heat with the battery and improving the heat exchange efficiency.

In some embodiments, referring to FIG. 6, the first heat exchange assembly includes a compressor 211, a first heat exchanger 212, an expansion valve 213, and a second heat exchanger 214 that are sequentially in communication through a refrigerant circulation pipeline. The refrigerant circulation pipeline, the compressor 211, the first heat exchanger 212, the expansion valve 213, and the second heat exchanger 214 form the first circulation loop 210a. Here, a refrigerant is used as the first heat exchange medium.

The first heat exchanger 212 may be an evaporator, and the second heat exchanger 214 may be a condenser. Alternatively, the first heat exchanger 212 may be a condenser, and the second heat exchanger 214 may be an evaporator. The refrigerant in the first circulation loop 210a may be, for example, Freon.

The heat exchange device 200 may be used as a cooling unit to cool the energy storage device 100. Specifically, the second circulation loop 220a exchanges heat with the evaporator through the liquid pipeline 222, such that the evaporator continuously cools the second heat exchange medium in the second circulation loop 220a, and thus the second circulation loop 220a efficiently cools the battery in the energy storage device 100.

The heat exchange device 200 may be used as a heating unit to heat the energy storage device 100. Specifically, the second circulation loop 220a may exchange heat with the condenser through the liquid pipeline 222, such that the condenser continuously heats the second heat exchange medium in the second circulation loop 220a, and thus the second circulation loop 220a efficiently heats the battery in the energy storage device 100.

The first heat exchanger 212 may sometimes be an evaporator and sometimes be a condenser, and the second heat exchanger 214 may sometimes be a condenser and sometimes be an evaporator, depending on the flow state of the refrigerant in the first circulation loop 210a.

In other words, the heat exchange device 200 can switch between a cooling unit and a heating unit; that is, the heat exchange device 200 may serve as both the cooling unit to cool the energy storage device 100 and the heating unit to heat the energy storage device 100. Specifically, the second circulation loop 220a may exchange heat with the first heat exchanger 212 through the liquid pipeline 222, and the flow direction of the refrigerant in the first circulation loop 210a can be changed by using a four-way valve 215, such that the first heat exchanger 212 is an evaporator and the second heat exchanger 213 is a condenser, or the first heat exchanger 212 is a condenser and the second heat exchanger 214 is an evaporator. When the first heat exchanger 212 is an evaporator and the second heat exchanger 214 is a condenser, the second circulation loop 220a may exchange heat with the evaporator through the liquid pipeline 222, such that the evaporator cools the second heat exchange medium in the second circulation loop 220a in time, and thus the second circulation loop 220a efficiently cools the battery in the energy storage device 100. When the first heat exchanger 212 is a condenser and the second heat exchanger 214 is an evaporator, the second circulation loop 220a exchanges heat with the condenser, such that the condenser heats the second heat exchange medium in the second circulation loop 220a in time, and thus the second circulation loop 220a continuously and efficiently heats the battery in the energy storage device 100.

The first circulation loop 210a can cool and heat the second circulation loop 220a in time, such that the battery in the energy storage device 100 can be continuously and efficiently cooled and heated, thereby improving the heat exchange efficiency while simplifying the structure and reducing the cost.

In some embodiments, the first heat exchanger 212 includes a first flow channel 212a and a second flow channel 212b; the first heat exchanger 212 is in communication with the first circulation loop 210a through the first flow channel 212a, and the second flow channel 212b is in communication with the liquid pipeline 222.

The first heat exchanger 212 may be a plate heat exchanger, which is a stacked body composed of a plurality of layers of plates and provided with two flow channels. The first flow channel 212a, serving as a part of the first circulation loop 210a, is configured to circulate the refrigerant, the second flow channel 212b, serving as a part of the second circulation loop, is configured to circulate the second heat exchange medium, and the second heat exchange medium exchanges heat with the first heat exchanger 212 when passing through the second flow channel 212b.

Heat exchange between the two circulation loops is implemented by using the first heat exchanger 212 provided with two flow channels, such that the heat loss is reduced, the heat exchange efficiency is improved, and the structure can be simplified.

In some embodiments, a plurality of energy storage devices 100 are provided, and the heat exchange device 200 is located outside the energy storage case 110.

The plurality of energy storage devices 100 may include an energy storage container and/or an energy storage electrical cabinet. For example, the plurality of energy storage devices 100 are all energy storage containers. Alternatively, the plurality of energy storage devices 100 are all energy storage electrical cabinets. Alternatively, some of the plurality of energy storage devices 100 are energy storage containers, and the other energy storage devices are energy storage electrical cabinets.

The heat exchange device 200 is located outside the energy storage case 110; the heat exchange device 200 and the energy storage case 110 are two independent structures, and the heat exchange device 200 does not occupy the internal space of the energy storage case 110. Therefore, more batteries can be placed inside the energy storage case 110, thereby improving the energy density of the energy storage device 100.

The heat exchange members 150 of the energy storage devices 100 may be connected in series or in parallel to each other.

Taking an example where the second circulation loop 220a cools the battery 120, the second heat exchange medium in the second circulation loop 220a takes away the heat generated by the battery 120, and meanwhile, the temperature of the second heat exchange medium in the second circulation loop 220a rises. Since the first circulation loop 210a can cool the second circulation loop 220a, the second heat exchange medium in the second circulation loop 22a can be cooled in time and maintain a relatively low temperature, such that the battery in each energy storage device 100 can be continuously and efficiently cooled, and the temperature of the second heat exchange medium flowing through the heat exchange members 150 is relatively uniform. Therefore, there is no need to provide too many monitoring elements (such as temperature sensors and pressure sensors) and control elements (such as flow controllers) on the heat exchange members 150, thereby simplifying the structure and reducing the cost.

By placing the heat exchange device 200 outside the energy storage case 110, the internal space of the energy storage case 110 is not occupied, and more batteries 120 can be placed in each energy storage case 110, thereby improving the energy density of each energy storage device. One heat exchange device 200 can continuously and efficiently exchange heat for a plurality of energy storage devices simultaneously by using two sets of circulation loops (the first circulation loop 210a and the second circulation loop 220a), thereby simplifying the entire structure, reducing the cost, and providing higher grouping efficiency of the energy storage system. In addition, the heat exchange device is located outside the energy storage device 100, which facilitates maintenance and replacement.

In some embodiments, referring to FIG. 6, the liquid pipeline 222 may include a main pipeline 2221 and a plurality of branches 2222 in communication with the main pipeline 2221, and the heat exchange members 150 of the energy storage devices 100 are connected in parallel to each other through the branches 2222.

The circulation pump 221 is disposed on the main pipeline 2221, and the main pipeline 2221 is in communication with the second flow channel 212b of the first heat exchanger 212.

The heat exchange members 150 of the energy storage devices 100 are connected in parallel to each other through the branches, which can reduce adverse effects on the heat exchange temperature of the battery and improve the heat exchange efficiency.

In some embodiments, the heat exchange member 150 of each energy storage device 100 is connected to a plurality of heat exchange plates 121, the heat exchange plates 121 are connected in parallel, and each heat exchange plate 121 exchanges heat with a respective battery. The heat exchange plates 121 may be provided inside the battery pack as a part of the battery pack. The heat exchange plate 121 may be in contact with or close to each battery cell in the battery pack, so as to exchange heat with the battery cell. Each battery pack may be provided with one or more heat exchange plates 121.

The energy storage case 110 may accommodate a plurality of batteries 120, and a heat exchange plate 121 may be provided for each battery 120; the heat exchange plates 121 are connected in parallel, such that a plurality of circulation loops connected in parallel are formed in one energy storage device 100.

The heat exchange member 150 is connected to a plurality of heat exchange plates 121 connected in parallel, which can reduce adverse effects on the heat exchange temperature of the battery and improve the heat exchange efficiency.

In some embodiments, each heat exchange member 150 includes a supply pipeline and a liquid return pipeline. The supply pipeline includes a liquid supply port and a first port that is in communication with each heat exchange plate 121, and the liquid return pipeline includes a liquid return port and a second port that is in communication with each heat exchange plate 121. Each energy storage case 110 is provided with a liquid inlet connector 161 and a liquid return connector 162; the liquid inlet connector 161 is connected to the liquid supply port, and the liquid return connector 162 is connected to the liquid return port. Therefore, the heat exchange plates 121 are connected in parallel to each other.

In some embodiments, the branch 2222 includes a liquid inlet branch and a liquid return branch; the liquid inlet branch is detachably connected to the liquid inlet connector 161, and the liquid return branch is detachably connected to the liquid return connector 162.

The liquid inlet connector 161 and the liquid return connector 162 are disposed outside the energy storage case 110 and are detachably connected to the branches, such that the installation and maintenance are facilitated, and the assembly efficiency is improved.

In some embodiments, the liquid inlet connector 161 is connected to the liquid inlet branch by means of snap-fitting, hot melting, or threading; and/or the liquid return connector 162 is connected to the liquid return branch by means of snap-fitting, hot melting, or threading.

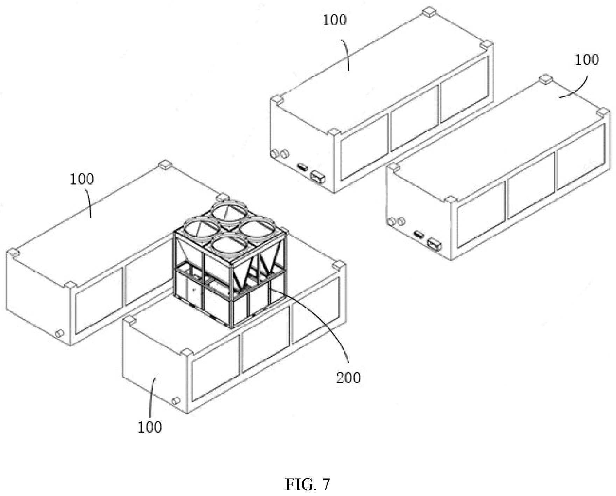

In some embodiments, referring to FIG. 7, the heat exchange device 200 is disposed at the top of the energy storage case 110 of at least one energy storage device 100.

The heat exchange device 200 may be disposed on the top of one energy storage case 110, or on the top of a plurality of energy storage cases 110; that is, the plurality of energy storage cases 110 jointly support the heat exchange device 200.

The heat exchange device 200 can be disposed at the top of the energy storage case 110, such that the occupied area can be reduced, and the land utilization can be improved. Therefore, more energy storage devices can be arranged to improve the energy density of the energy storage system.

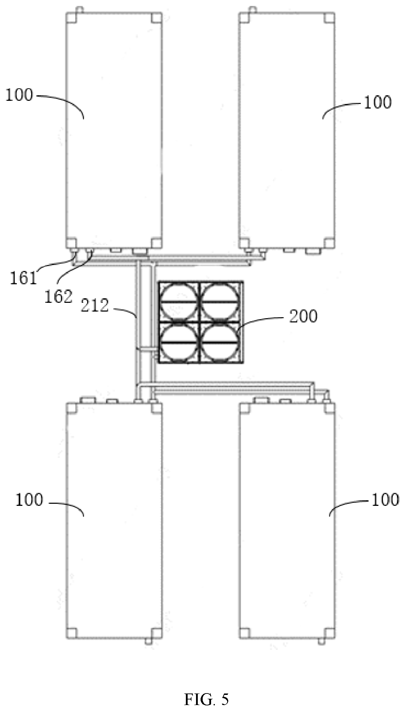

In some embodiments, referring to FIGs. 4 and 5, the plurality of energy storage devices 100 are arranged to surround the heat exchange device 200, with the heat exchange device 200 as the center.

The center here is not necessarily a geometric center in a strict sense, and includes the case where the energy storage devices 100 are disposed around the heat exchange device 200 while being spaced apart from each other by a certain interval.

Therefore, the lengths of the branches connecting the heat exchange device 200 to the energy storage devices 100 can be reduced, and the lengths of the branches are substantially the same, thereby shortening the circulation time of the second heat exchange medium in the second circulation loop 220a, and improving the heat exchange efficiency and the heat exchange uniformity.

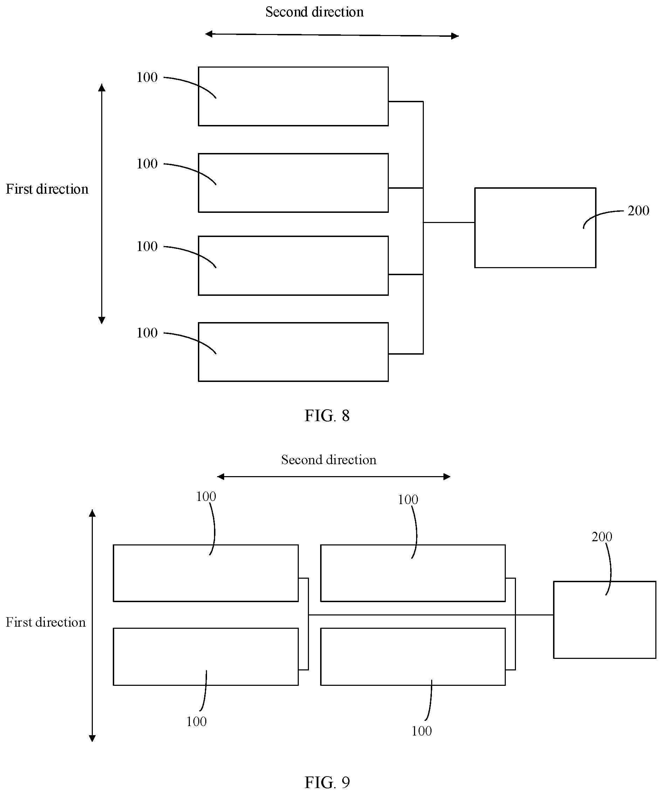

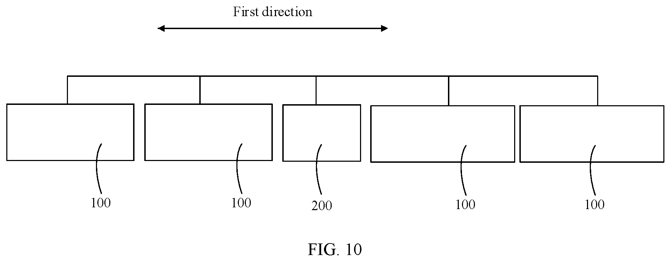

In some embodiments, referring to FIG. 8, the plurality of energy storage devices 100 are arranged along a first direction to form an energy storage device row, and along a second direction intersecting with the first direction, the heat exchange device 200 is located on one side of the energy storage device row. Alternatively, referring to FIG. 10, the heat exchange device 200 is located between any two energy storage devices along the first direction.

In some embodiments, referring to FIG. 9, the plurality of energy storage devices 100 are arranged along the first direction to form an energy storage device row, and a plurality of energy storage device rows are arranged along the second direction intersecting with the first direction; the heat exchange device 200 is located on one side of the energy storage device 100 along either the first direction or the second direction.

A specific example of the present disclosure will be described below.

Referring to FIGs. 4 to 6, the embodiments of the present disclosure provide an energy storage system. The energy storage system includes a plurality of energy storage devices 100 and a heat exchange device 200.

Each energy storage device 100 includes an energy storage case 110 and a heat exchange member 150 (referring to FIG. 6) disposed in the energy storage case 110. The heat exchange members 150 are connected in parallel to each other. The energy storage case 110 accommodates a battery 120, and the heat exchange member 150 is configured to exchange heat with the battery 120.

The heat exchange device 200 is located outside the energy storage case 110, and the heat exchange device 200 includes a first heat exchange assembly and a second heat exchange assembly. The second heat exchange assembly includes a liquid pipeline 222 and a circulation pump 221. The liquid pipeline 222, the circulation pump 221, and the heat exchange members 150 form a plurality of second circulation loops 220a that are connected in parallel to each other. Specifically, the liquid pipeline 222 includes a main pipeline 2221 and a plurality of branches 2222, and the heat exchange members 150 are connected in parallel to the main pipeline 2221 through the plurality of branches 2222. Specifically, each energy storage case 110 is provided with a liquid inlet connector 161 and a liquid return connector 162, and the liquid inlet connector 161 and the liquid return connector 162 are in communication with an inlet and an outlet of the heat exchange member 150, respectively. The circulation pump 221 is disposed on the main pipeline 2221; a liquid outlet of the main pipeline 2221 is in communication with the liquid inlet connector 161 of each energy storage case 110 through each branch 2222, and a liquid return port of the main pipeline 2221 is in communication with the liquid outlet interface 162 of each energy storage case 110 through each branch 2222, such that the liquid pipeline 222, the circulation pump 221, and the heat exchange members 150 form the plurality of second circulation loops 220a that are connected in parallel to each other.

The first heat exchange assembly includes a compressor 211, a first heat exchanger 212, an expansion valve 213, and a second heat exchanger 214 that are sequentially in communication through a refrigerant circulation pipeline. The refrigerant circulation pipeline, the compressor 211, the first heat exchanger 212, the expansion valve 213, and the second heat exchanger 214 form a first circulation loop 210a. The liquid pipeline 222 and the first heat exchanger 212 are disposed close to each other, such that the second circulation loop 220a exchanges heat with the first heat exchanger 212 through the liquid pipeline 222. The refrigerant in the first circulation loop 210a may be, for example, Freon.

The heat exchange device 200 may serve as both a cooling unit to cool each energy storage device 100 and a heating unit to heat each energy storage device 100. Specifically, the second circulation loop 220a may exchange heat with an evaporator through the liquid pipeline 222, and the flow direction of the refrigerant in the first circulation loop 210a can be changed by using a four-way valve 215, such that the first heat exchanger 212 is an evaporator and the second heat exchanger 214 is a condenser, or the first heat exchanger 212 is a condenser and the second heat exchanger 214 is an evaporator. When the first heat exchanger 212 is an evaporator and the second heat exchanger 214 is a condenser, the second circulation loop 220a exchanges heat with the evaporator through the liquid pipeline 222, such that the evaporator cools the liquid in the second circulation loop 220a in time, and thus the heat exchange member 150 in the second circulation loop 220a efficiently cools the battery in each energy storage device 100. When the first heat exchanger 212 is a condenser and the second heat exchanger 214 is an evaporator, the second circulation loop 220a exchanges heat with the condenser through the liquid pipeline 222, such that the condenser heats the liquid in the second circulation loop 220a in time, and thus the heat exchange member 150 in the second circulation loop 220a continuously and efficiently heats the battery in each energy storage device 100.

Therefore, by placing the heat exchange device 200 outside the energy storage case 110, the internal space of the energy storage case 110 is not occupied, and more batteries 120 can be placed in each energy storage case 110, thereby improving the energy density of each energy storage device. One heat exchange device 200 can continuously and efficiently exchange heat for a plurality of energy storage devices simultaneously by using two sets of circulation loops (the first circulation loop 210a and the second circulation loop 220a), thereby simplifying the entire structure, reducing the cost, and providing higher grouping efficiency of the energy storage system. In addition, the heat exchange device is located outside the energy storage device 100, which facilitates maintenance and replacement.

The foregoing embodiments are merely used to illustrate the technical solutions of the present disclosure, rather than limit the same. Although the present disclosure has been described in detail with reference to the foregoing embodiments, those of ordinary skill in the art should understand that modifications can still be made to the technical solutions recorded in the foregoing embodiments, or equivalent substitutions to some or all of the technical features can be made. However, such modifications or substitutions do not make the spirit of the corresponding technical solutions deviate from the scope of the technical solutions in the embodiments of the present disclosure, and shall all fall within the scope of the claims and specification of the present disclosure. In particular, the technical features mentioned in the embodiments can be combined in any manner, provided that there is no structural conflict. The present disclosure is not limited to the specific embodiments disclosed herein, but encompasses all technical solutions falling within the scope of the claims.

### INDUSTRIAL APPLICABILITY

According to the present disclosure, an energy storage system with high heat exchange efficiency is provided.

## Claims

1. An energy storage system, comprising:
at least one energy storage device, wherein each energy storage device comprises an energy storage case and a heat exchange member disposed in the energy storage case, the energy storage case accommodates at least one battery, and the heat exchange member is configured to exchange heat with the battery; and
a heat exchange device, wherein the heat exchange device comprises a first heat exchange assembly and a second heat exchange assembly, the first heat exchange assembly comprises a first circulation loop, the second heat exchange assembly is in communication with the heat exchange member and forms at least one second circulation loop, and the second circulation loop exchanges heat with the first circulation loop.

2. The energy storage system according to claim 1, wherein
the second circulation loop and the first circulation loop are disposed close to each other.

3. The energy storage system according to claim 1 or 2, wherein
the second heat exchange assembly comprises a circulation pump and a liquid pipeline, and the circulation pump is in communication with the heat exchange member through the liquid pipeline.

4. The energy storage system according to claim 3, wherein
the first heat exchange assembly comprises a compressor, a first heat exchanger, an expansion valve, and a second heat exchanger that are sequentially in communication through a refrigerant circulation pipeline.

5. The energy storage system according to claim 4, wherein
the first heat exchanger comprises a first flow channel and a second flow channel; the first flow channel is in communication with the refrigerant circulation pipeline, and the second flow channel is in communication with the liquid pipeline.

6. The energy storage system according to any one of claims 1 to 5, wherein
a plurality of the energy storage devices are provided, and the heat exchange device is located outside the energy storage case.

7. The energy storage system according to claim 6, wherein
the liquid pipeline comprises a main pipeline and a plurality of branches in communication with the main pipeline, and the heat exchange members of the energy storage devices are connected in parallel to each other through the branches.

8. The energy storage system according to claim 7, wherein
the heat exchange member of each energy storage device is connected to a plurality of heat exchange plates; the heat exchange plates are connected in parallel, and each heat exchange plate exchanges heat with a respective battery.

9. The energy storage system according to claim 8, wherein
each heat exchange member comprises a supply pipeline and a liquid return pipeline; the supply pipeline comprises a liquid supply port and a first port that is in communication with each heat exchange plate, and the liquid return pipeline comprises a liquid return port and a second port that is in communication with each heat exchange plate;
each energy storage case is provided with a liquid inlet connector and a liquid return connector; the liquid inlet connector is connected to the liquid supply port, and the liquid return connector is connected to the liquid return port.

10. The energy storage system according to claim 9, wherein
the branch comprises a liquid inlet branch and a liquid return branch; the liquid inlet branch is detachably connected to the liquid inlet connector, and the liquid return branch is detachably connected to the liquid return connector.

11. The energy storage system according to claim 10, wherein
the liquid inlet connector is connected to the liquid inlet branch by means of snap-fitting, hot melting, or threading; and/or
the liquid return connector is connected to the liquid return branch by means of snap-fitting, hot melting, or threading.

12. The energy storage system according to any one of claims 1 to 11, wherein
the heat exchange device is disposed at a top of the energy storage case of at least one energy storage device; or
the plurality of energy storage devices surround the heat exchange device, with the heat exchange device as a center.

13. The energy storage system according to any one of claims 1 to 11, wherein
the plurality of energy storage devices are arranged along a first direction to form an energy storage device row;
along a second direction intersecting with the first direction, the heat exchange device is located on one side of the energy storage device row; or the heat exchange device is located between any two energy storage devices along the first direction.

14. The energy storage system according to any one of claims 1 to 11, wherein the plurality of energy storage devices are arranged along a first direction to form an energy storage device row, and a plurality of the energy storage device rows are arranged along a second direction intersecting with the first direction;
the heat exchange device is located on one side of the energy storage device along either the first direction or the second direction.

15. The energy storage system according to any one of claims 1 to 14, wherein
the energy storage device comprises an energy storage container and/or an energy storage electrical cabinet.
